# DEMANDE DE BREVET EUROPEEN

(11) **EP 2 314 949 A1**
(43) Date de publication de la demande: **27.04.2011**
(21) Numéro de dépôt: 10188098.7
(22) Date de dépôt: 19.10.2010
(51) Int. Cl.: F24J 2/04, H01L 31/042, F24J 2/52

(54) **Dispositif photovoltaïque**

(30) Priorité: 20.10.2009 FR 0905024
(71) Demandeur: SARL Moureau Simon, 71580 Savigny-en-Revermont (FR)
(72) Inventeur: Moureau, Simon, 71580 Savigny-en-Revermont (FR)
(74) Mandataire: Oudin, Stéphane

(57) **Abrégé**

L'invention concerne un dispositif photovoltaïque comportant des panneaux (1) ayant une surface active (10) photovoltaïque encadrée par un module haut (2), un module bas (3), un module droit (4) et un module gauche (5), définissant lesdits bords dudit panneau (1), et un support comportant un premier et un second éléments support (8) définissant respectivement un premier logement (80) recevant le module haut (2), un relief (82) opposé s'engageant dans un deuxième logement (81) formé par le module bas (3), ledit premier panneau (1) présentant une hauteur séparant les arêtes extrêmes de ses modules bas (3) et haut (4), supérieure à la distance séparant l'ouverture dudit premier logement (80) et l'extrémité dudit relief (81), ledit premier panneau (1) présentant une hauteur séparant l'arête extrême de son module haut (2) et l'ouverture dudit deuxième logement (31) inférieure à la distance séparant le fond dudit premier logement (80) et l'extrémité dudit relief (81).

## Description

### Domaine technique

La présente invention concerne un dispositif photovoltaïque pour la fixation d'une pluralité de panneaux photovoltaïques à une structure portante, notamment pour l'intégration de panneaux photovoltaïques à une toiture.

### Technique antérieure

Les panneaux photovoltaïques sont de plus en plus fréquemment utilisés pour convertir le rayonnement solaire en électricité. De manière traditionnelle, les panneaux photovoltaïques comportent une multitude de cellules photovoltaïques à base de matériau semi-conducteur qui absorbe l'énergie lumineuse et la transforme directement en courant électrique. Le principe de fonctionnement de ces cellules photovoltaïques fait appel aux propriétés du rayonnement et à celles des semi-conducteurs. Cette technologie non polluante, silencieuse et qui n'entraîne aucune perturbation du milieu est très séduisante en terme de protection de l'environnement. Elle présente donc des perspectives d'avenir indiscutables. Aussi, la technologie photovoltaïque est de plus en plus couramment intégrée et recommandée dans les programmes nationaux d'électrification notamment rurale (habitations domestiques, écoles, centres de santé, télécommunication, ...).

Pour limiter l'occupation de l'espace nécessaire à ces installations photovoltaïques, les panneaux photovoltaïques sont souvent installés au-dessus des bâtiments, disposés adjacents les uns aux autres sur un support rigide, formé de profilés, et qui permet de maintenir les panneaux photovoltaïques dans une position fixe. Les panneaux photovoltaïques sont orientés de manière prédéterminée de sorte que l'angle formé entre les panneaux photovoltaïques et les rayons du soleil soit optimal pour un rendement le plus élevé possible de l'installation photovoltaïque.

Le caractère modulaire des panneaux photovoltaïques facilite leur montage. La mise en place en hauteur d'une installation complète de panneaux photovoltaïques reste néanmoins une opération délicate et fastidieuse de par le poids du support et des panneaux. Pour être rentable, une fois montée, l'installation photovoltaïque doit pouvoir durer dans le temps et en particulier résister aux intempéries. Ainsi, un aspect critique de ce genre d'installation est son aptitude à encaisser des dilatations et rétractions liées aux différences de températures.

A cet effet, la demande de brevet français FR 2 465 315 décrit un support pour panneaux photovoltaïques destiné à être utilisé directement sur la charpente, par exemple d'une maison, et apte à encaisser les dilatations et rétractions de cette charpente. Ce support comporte deux modules latéraux, un module bas et un module haut, assemblés parallèlement deux à deux pour former un cadre sensiblement parallélépipédique. Chaque profilé forme un U d'emboîtement dans lequel le panneau est logé. Le module bas comporte un relief apte à être reçu dans une gorge formée par le module haut. Réciproquement, le module haut définit des reliefs aptes à être reçus dans des gorges formées par le module bas, ces emboitements permettant le positionnement des panneaux les uns par rapport aux autres. Un joint en matière élastomère assure l'étanchéité entre le panneau et chaque module. Le U d'emboîtement des modules latéraux gauche et droit est adjacent à deux rainures d'emboîtement orientées perpendiculairement à l'ouverture du U et délimitées par des ailes d'emboîtement. Les modules latéraux droit et gauche sont identiques entre eux et disposés tête bêche l'un par rapport à l'autre de sorte que les ailes d'emboîtement du profilé droit d'un premier panneau s'emboîtent dans les rainures d'emboîtement du module gauche d'un second panneau disposé à droite du premier panneau. Il en va de même pour le module gauche du premier panneau dont les rainures d'emboîtement chevauchent les ailes d'emboîtement du module droit d'un troisième panneau disposé à gauche du premier panneau. Le recouvrement latéral des ailes d'emboîtement par les rainures d'emboîtement permet de garantir l'étanchéité. De plus, les ailes d'emboîtement ont une hauteur inférieure à celle des modules pour permettre, après emboîtement, de garantir la planéité des panneaux photovoltaïques d'une même rangée les uns entre les autres. Le module bas a une section similaire aux modules gauche et droite. Le module haut comporte une seule rainure d'emboîtement dont l'ouverture est orientée perpendiculairement à celle du U d'emboîtement et destinée à recevoir l'aile d'emboîtement séparant les rainures d'emboîtement du module bas d'un quatrième panneau disposé au-dessus du premier panneau. Afin d'équiper une surface de plusieurs panneaux photovoltaïques, l'installateur doit commencer par monter le support puis, une première rangée de panneaux photovoltaïques, de droite à gauche ou de gauche à droite, continuer par le montage des panneaux de la rangée supérieure et ainsi de suite jusqu'à l'obtention de la surface couverte souhaitée. Les jeux préservés entre les ailes d'emboîtement et les rainures d'emboîtement permettent à l'ensemble d'encaisser des déformations importantes, notamment liées aux dilatations, rétractions et déformations de la charpente, sans pour autant solliciter de manière inadaptée les panneaux photovoltaïques. Les modules bas et haut de ce support peuvent être fixés à la charpente au moyen de clous ou de vis traversant une des ailes des profilés. Les modules peuvent également être fixés à la charpente par l'intermédiaire de crochets repliés dans les rainures d'emboîtement et fixés au liteau de la charpente. Lors du montage, des languettes de matière plastique peuvent être introduites au niveau des angles des profilés formant les modules, entre les extrémités des profilés afin de compléter l'étanchéité de la surface photovoltaïque. Malgré les avantages qu'il présente, le support décrit dans cette publication impose un ordre de montage spécifique des panneaux photovoltaïques. Il est par exemple impossible de démonter un panneau se situant au milieu d'une rangée sans démonter l'ensemble des panneaux qui se situent soit à droite soit à gauche de ce panneau, voire même de démonter l'ensemble des panneaux des rangées supérieures et/ou inférieures.

Aussi le montage de ce support et sa maintenance, par exemple lorsqu'il faut changer l'un des panneaux photovoltaïques, sont des opérations difficiles, longues et coûteuses qui nécessitent beaucoup de rigueur de la part des installateurs.

Par ailleurs, la demande de brevet japonais JP 2004/116 240 divulgue un dispositif photovoltaïque comportant des panneaux photovoltaïques et des supports de fixation de ces panneaux à une structure portante. Les supports se présentent sous la forme de profilés comportant chacun deux logements orientés à l'opposé l'un de l'autre, dont un premier logement apte à recevoir le module haut d'un premier panneau et un second logement apte à recevoir le module bas d'un second panneau. La distance séparant le fond des premier et second logements est supérieure à la hauteur du panneau de manière à autoriser un débattement du panneau dans les logements. De plus, la distance séparant les arêtes délimitant les ouvertures des premier et second logements est inférieure à la hauteur du panneau de sorte que le panneau peut être engagé incliné dans le premier logement, puis rabattu dans le second logement dans lequel il est glissé.

La demande de brevet japonais JP 2003/336 357 divulgue plusieurs modes de réalisation d'un dispositif photovoltaïque comportant des panneaux photovoltaïques encadrés chacun par des profilés dont un module haut et un module bas. Dans un premier mode de réalisation, le module haut comporte une gorge apte à recevoir un relief formé par le module bas et permettant ainsi l'emboitement des panneaux les uns avec les autres. Le module haut est fixé directement sur la structure portante. Dans un second mode de réalisation, le dispositif photovoltaïque comporte un support apte à coopérer avec les modules haut et bas pour fixer les panneaux à la structure portante. Dans le premier exemple de ce second mode de réalisation, le support comporte une gorge apte à recevoir un relief du module haut d'un premier panneau, et forme un relief et des gorges aptes à coopérer avec des reliefs et une gorge du module bas d'un second panneau. Dans le second exemple du second mode de réalisation, le support définit, de part et d'autre de son plan médian, un relief et des gorges aptes à coopérer avec des reliefs et une gorge du module bas d'un second panneau.

La demande de brevet allemand DE 20-2007/010 330 divulgue un dispositif photovoltaïque comportant des panneaux photovoltaïques encadrés chacun par des profilés dont un module haut et un module bas aptes à s'emboiter dans des supports latéraux eux-mêmes fixés à des profilés longitudinaux fixés sur une structure portante.

La demande de brevet japonais JP 2003/056 131 divulgue un dispositif photovoltaïque comportant des panneaux photovoltaïques encadrés chacun par des profilés dont un module haut et un module bas comportant des formes d'emboîtement complémentaires aptes à s'engager pour bloquer les panneaux les uns par rapport aux autres. Les panneaux sont fixés au moyen de l'un des modules haut-bas fixé directement sur la structure portante.

Les dispositifs photovoltaïques connus sont souvent peu pratiques à installer et leurs modes de fixation rendent difficiles les opérations de maintenance.

### Exposé de l'invention

La présente invention vise à remédier à ces inconvénients en proposant une alternative de dispositif photovoltaïque simple à poser, permettant le montage et le démontage individuel des panneaux photovoltaïques, dans tout ordre, apte à encaisser les intempéries, en particulier la répétition de rétractions et de dilatations liées aux variations de températures, tout en préservant l'intégrité des panneaux photovoltaïques.

L'invention concerne un dispositif photovoltaïque comportant une pluralité de panneaux photovoltaïques et un support pour fixer les panneaux, les panneaux comportant chacun au moins une surface active pourvue de cellules photovoltaïques, la surface active étant encadrée par des profilés formant un module haut, un module bas, un module droit et un module gauche, définissant les bords du panneau, le support comportant au moins un premier et un second éléments support disposés en regard l'un de l'autre pour supporter au moins un premier panneau et comportant des moyens de fixation agencés pour les fixer à une structure portante, le premier élément support comportant au moins un premier logement apte à recevoir le module haut. Ce dispositif photovoltaïque est remarquable en ce que le second élément support comporte au moins un relief apte à être engagé dans un deuxième logement formé par le module bas du premier panneau en ce qu'au moins le premier panneau présente une hauteur séparant les arêtes extrêmes de ses modules bas et haut, supérieure à la distance séparant l'ouverture du premier logement du premier élément support et l'extrémité du relief du second élément support et en ce que le premier panneau présente une hauteur séparant l'arête extrême de son module haut et l'ouverture du deuxième logement formée par son module bas inférieure à la distance séparant le fond du premier logement et l'extrémité du relief pour que le premier panneau puisse être mobile entre :
- une position « pré-montée » dans laquelle le premier bord du premier panneau est engagé dans le premier logement afin de préserver un premier jeu longitudinal avec le fond du premier logement, et dans laquelle le relief n'est pas engagé dans le deuxième logement, et
- une position « montée » dans laquelle le premier bord du premier panneau est engagé dans le premier logement afin de préserver un second jeu longitudinal avec le fond du premier logement supérieur au premier jeu longitudinal, et dans laquelle le relief est engagé dans le deuxième logement,
le premier élément support comportant un relief orienté à l'opposé de l'ouverture du premier logement.

Le dispositif photovoltaïque selon l'invention permet ainsi de démonter individuellement tout panneau photovoltaïque, quelle que soit sa position en regard des autres panneaux photovoltaïques constituant la surface photovoltaïque. De plus, le dispositif photovoltaïque est ainsi apte à encaisser des déformations longitudinales sans solliciter les panneaux qui ont une durée de vie accrue.

Dans un mode de réalisation préféré, le deuxième élément support comporte un premier logement orienté à l'opposé du relief et apte à recevoir le module haut d'un second panneau.

Les premier et deuxième éléments support comportent de préférence chacun une barre pourvue simultanément d'une rainure d'engagement définissant le premier logement et d'une aile de maintien définissant le relief.

De manière avantageuse, le module bas comporte une rainure de maintien définissant le deuxième logement.

Le dispositif photovoltaïque comporte au moins un élément de plaquage agencé pour être disposé le long d'au moins un des troisième et quatrième bords d'un panneau, l'élément de plaquage étant agencé pour maintenir le panneau plaqué contre le support tout en préservant un jeu latéral avec respectivement son module droit et son module gauche. Le dispositif photovoltaïque est ainsi apte à encaisser des déformations latérales sans solliciter mécaniquement les panneaux et tout en garantissant un maintien efficace de ces panneaux.

L'élément de plaquage comporte au moins un profilé dont une extrémité est agencée pour être logée dans le premier logement, au moins une aile de plaquage agencée pour que sa face inférieure soit en appui sur l'un au moins des module droit et son module gauche. Cette aile de plaquage a par exemple un profil incurvé.

L'élément de plaquage comporte une âme sensiblement perpendiculaire à l'aile de plaquage, une arête de l'âme étant raccordée à l'aile de plaquage, l'autre arête de l'âme étant raccordée à un retour définissant une gorge de positionnement fermant au moins en partie l'espace délimité par l'aile de plaquage et l'âme.

Le dispositif photovoltaïque comporte au moins un élément de retenue disposé entre l'un au moins des module droit et son module gauche et l'élément de plaquage, cet élément de retenue étant agencé pour empêcher la translation de l'élément de plaquage le long des module droit et son module gauche.

L'élément de retenue comporte au moins une lame élastiquement déformable solidaire de l'un des module droit et son module gauche et élément de plaquage, la lame étant également en appui sur une butée prévue respectivement sur l'un des éléments de plaquage, module droit et son module gauche.

Selon un mode de réalisation avantageux, l'élément de plaquage comporte au moins un profilé dont une extrémité est agencée pour être logée dans le premier logement, ce profilé comportant également au moins une aile de plaquage agencée pour que sa face inférieure soit en appui sur l'un au moins des troisième et quatrième bords.

L'élément de plaquage peut comporter une âme sensiblement perpendiculaire à l'aile de plaquage, une arête de l'âme étant raccordée à l'aile de plaquage, l'autre arête de l'âme étant raccordée à un retour définissant une gorge de positionnement fermant au moins en partie l'espace délimité par l'aile de plaquage et l'âme.

Le dispositif photovoltaïque comporte de préférence au moins un élément de retenue disposé entre l'un au moins des troisième et quatrième bords et l'élément de plaquage et agencé pour empêcher la translation de l'élément de plaquage le long des troisième et quatrième bords.

L'élément de retenue peut comporter au moins une lame élastiquement déformable solidaire de l'un des modules droit/gauche et élément de plaquage, la lame étant également en appui sur une butée prévue respectivement sur l'un des éléments de plaquage, et modules droit/gauche.

Les modules gauche et droit sont avantageusement formés de profilés sensiblement identiques comportant chacun une rainure de fixation respectivement gauche et droite destinée à recevoir le premier panneau, une rainure de positionnement sensiblement perpendiculaire à la rainure de fixation gauche et droite et destinée à être engagée dans la gorge de positionnement et une surface d'appui gauche et droite sensiblement parallèle à la rainure de fixation gauche et droite et destinée à venir en appui dans ladite rainure d'engagement.

Le module bas comporte au moins une rainure de maintien définissant le deuxième logement, une surface de fixation destinée à recevoir l'appui du premier panneau et sensiblement perpendiculaire à la rainure de maintien, le module bas définissant également une surface d'appui basse destinée à venir en contact avec la barre, la surface d'appui basse étant décalée latéralement de la surface de fixation.

Le module haut comporte une rainure de fixation haute destinée à recevoir le premier panneau, une rainure d'étanchéité sensiblement perpendiculaire à la rainure de fixation haute et apte à recevoir un joint d'étanchéité, et une surface d'appui haute sensiblement parallèle à la rainure de fixation haute et destinée à venir en appui dans la rainure d'engagement.

L'élément de plaquage comporte des moyens de fixation agencés pour le fixer à une structure portante telle que par exemple une charpente de bâtiment.

### Description sommaire des dessins

L'invention est décrite ci-après, à titre d'exemple non limitatif, en référence aux dessins annexés sur lesquels :
- La figure 1 est une vue en élévation d'une partie de du dispositif photovoltaïque selon l'invention, ce dispositif photovoltaïque comportant notamment une surface active encadré par des modules haut, bas, gauche et droit ;
- Les figures 2 à 7 sont des vues en coupe d'une partie des différents éléments constitutifs du dispositif photovoltaïque selon l'invention, à savoir respectivement une barre, une aiguille, un module bas, un module haut, un module droit et un module gauche ;
- La figure 8 est une vue en coupe transversale du dispositif photovoltaïque selon l'invention et de deux panneaux adjacents sur laquelle le joint de colle est représenté noirci, la coupe étant considérée selon la ligne de coupe AA de la figure 1 ;
- La figure 9 est une vue en coupe longitudinale du dispositif photovoltaïque selon l'invention et de deux panneaux adjacents sur laquelle le joint de colle est représenté noirci, la coupe étant considérée selon la ligne de coupe BB de la figure 1 ;
- Les figures 10A et 10B sont des demi-vues en coupe transversale similaires à la figure 8, de deux variantes de réalisation du dispositif photovoltaïque selon l'invention, demie-vues sur lesquels l'élément de retenue est représenté noirci ;
- Les figures 11A et 11B sont des vues partielles de dessus des figures 10A et 10B illustrant la coopération entre les éléments de retenue, les modules gauche, droite et l'aiguille.

### Meilleure manière de réaliser l'invention

Le dispositif photovoltaïque selon l'invention comporte un support sur lequel sont fixés des panneaux photovoltaïques.

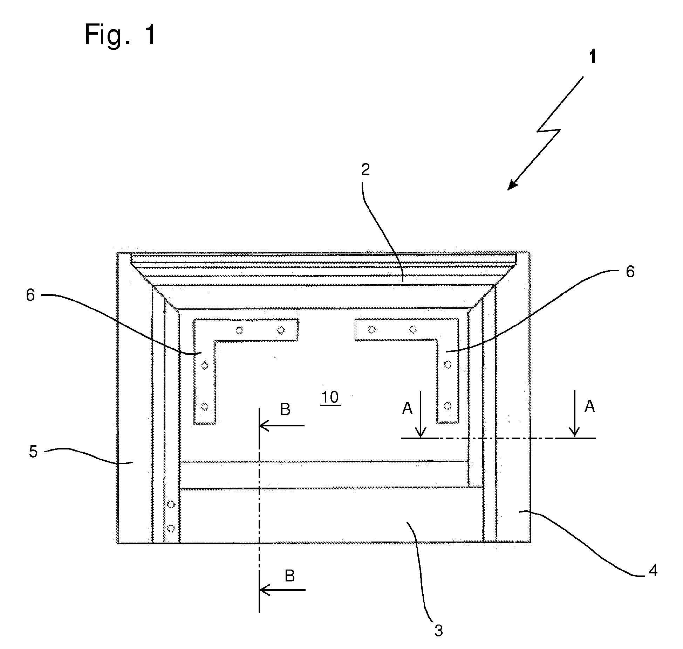

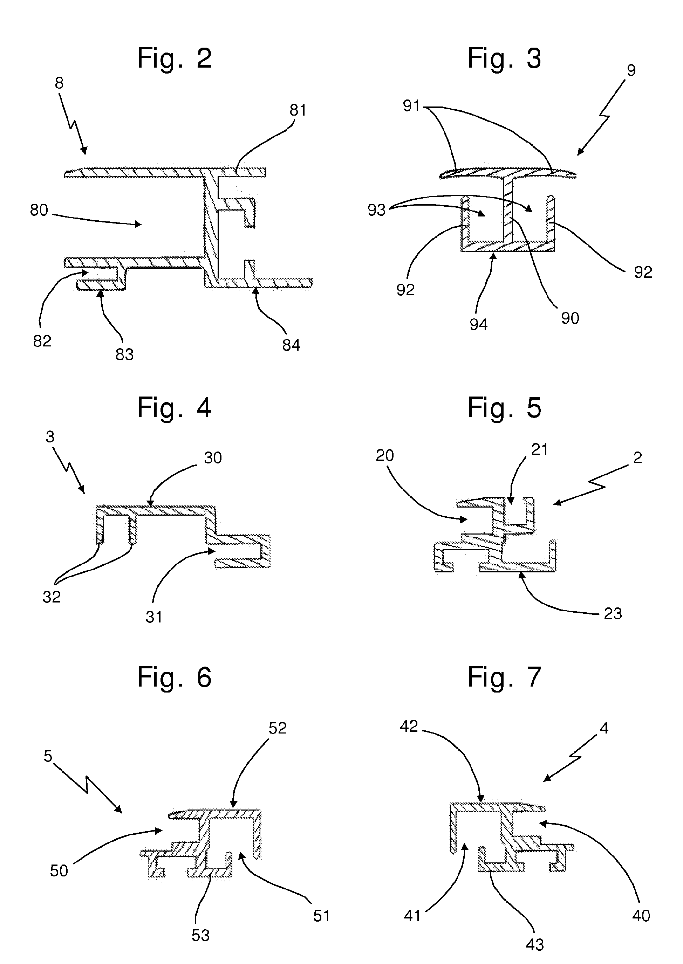

En référence à la figure 1, chaque panneau 1 comporte une surface active 10 comportant des cellules photovoltaïques à base de matériau semi-conducteur. Cette surface active 10 est sensiblement rectangulaire et ses bords sont encadrés par des profilés formant un module haut 2, un module bas 3, un module droit 4 et un module gauche 5. Ces profilés sont par exemple réalisés en aluminium. Les sections de chacun de ces profilés et des autres éléments du dispositif photovoltaïque sont détaillées plus loin en référence notamment aux figures 2 à 7. Les extrémités supérieures des modules droit 4 et gauche 5 et les deux extrémités du module haut 2 sont coupées en biseau de manière à pouvoir s'emboîter les uns avec les autres en formant des angles droits. Des équerres 6 vissées dans le module haut 2 et respectivement dans les modules droit 4 et gauche 5 permettent de consolider la position des profilés les uns par rapport aux autres. De même, des longerons 7 vissés dans le module bas 3 et dans les modules droit 4 et gauche 5 permettent de consolider la position des profilés les uns par rapport aux autres. Dans d'autres variantes de réalisation non représentées, les panneaux peuvent bien entendu avoir toute autre forme adaptée telle que par exemple un losange, un hexagone.

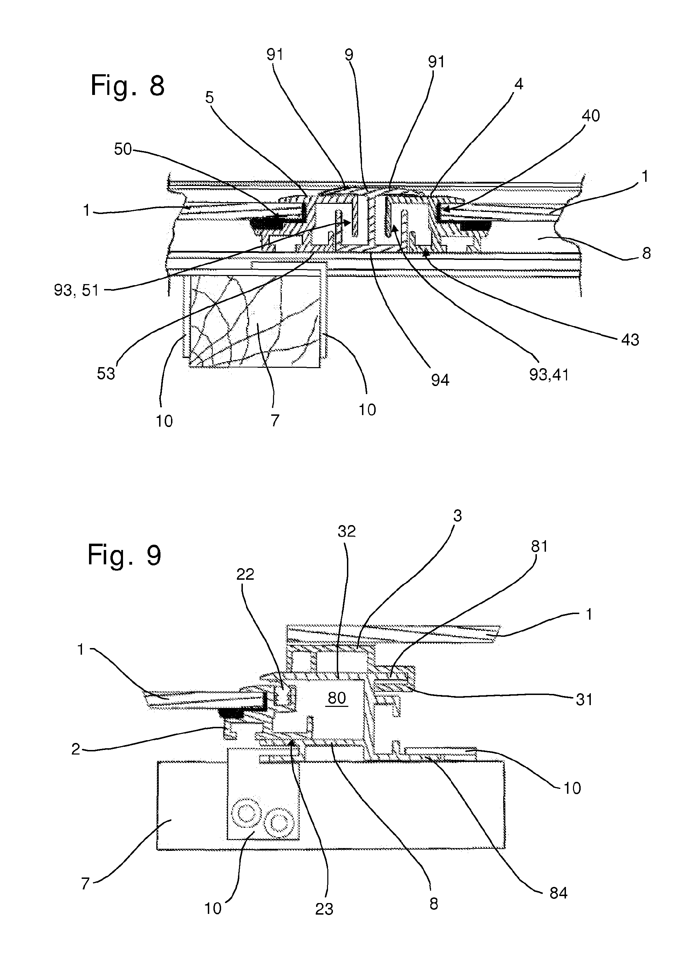

En référence à la figure 8, le dispositif photovoltaïque comporte plusieurs **panneaux** 1 adjacents dont deux seulement sont représentés. Ces **panneaux** 1 comportent chacun un module haut et bas et des modules gauche 5 et droit 4. Seuls le module droit 4 du panneau 1 disposé à gauche et le module gauche 5 du panneau 1 disposé à droite sont représentés. Les **panneaux** 1 sont supportés par un support comportant un premier et un second éléments support 8 fixés perpendiculairement aux liteaux 7 d'une charpente, dont l'un des liteaux 7 seulement est représenté. Chaque premier et un second éléments support comporte une barre 8 et coopère avec des crochets 10, et une aiguille 9. Les barres 8 et l'aiguille 9 sont formées chacune d'un profilé et les crochets 10 sont formés par des plaques pliées à angle droit et traversées par des orifices permettant leur fixation sur les liteaux 7 au moyen de vis.

En référence à la figure 2, chaque barre 8 comporte une rainure d'engagement 80 formée par deux ailes du profilé définissant un premier logement. La barre 8 comporte aussi une aile de maintien 81 orientée à l'opposé de l'ouverture de la rainure d'engagement 80, formée par le prolongement d'une des ailes de la rainure d'engagement 80 et définissant un relief. La barre 8 comporte également une rainure de crochetage 82 sensiblement parallèle à la rainure d'engagement 80 et orientée dans le même sens. La rainure de crochetage 82 est formée par deux ailes dont une aile interne qu'elle partage avec la rainure d'engagement 80 et qui est distincte de l'aile dont le prolongement forme l'aile de maintien 81. L'aile externe de la rainure de crochetage 82 forme une première surface d'appui 83 de la barre 8. La barre 8 comporte enfin une aile disposée dans le prolongement de l'aile externe de la rainure de crochetage 82 et définissant une deuxième surface d'appui 84 de la barre 8.

En référence à la figure 3, l'aiguille 9 est formée par un profilé et définit un élément de plaquage. L'aiguille 9 comporte une âme 90 dont une des extrémités est prolongée latéralement par deux ailes de plaquage 91 sensiblement perpendiculaire à l'âme 90. Ces ailes de plaquage 91 peuvent avoir un profil incurvé. L'extrémité de l'âme 90, opposée aux ailes de plaquage 91, est prolongée latéralement par des retours 92, orientés en direction des ailes de plaquage 91 qui définissent chacun, avec l'âme 90 et les ailes de plaquage 91, une gorge de positionnement 93 fermant au moins en partie l'espace délimité par les ailes de plaquage 91 et l'âme 90. La face inférieure des retours 92 définit une surface d'appui centrale 94. Dans cet exemple, l'aiguille 9 est sensiblement symétrique par rapport à son plan médian. Il est bien entendu que l'aiguille peut être dissymétrique.

En référence à la figure 4, le module bas 3 est formé d'un profilé comportant une surface de fixation 30 destinée à recevoir l'appui du bord inférieur du panneau 1, et une rainure de maintien 31 formant le deuxième logement et sensiblement perpendiculaire à la surface de fixation 30. Le module bas 3 comporte également deux ailettes 32 dont les extrémités définissent, avec la face intérieure supérieure de la rainure de maintien 31, une surface d'appui basse destinée à venir en contact avec la barre 8.

En référence à la figure 5, le module haut 2 est formé d'un profilé comportant une rainure de fixation haute 20 destinée à recevoir le bord supérieur du panneau 1 dans laquelle il est par exemple collé. Le module haut 2 comporte également une rainure d'étanchéité 21 sensiblement perpendiculaire à la rainure de fixation haute 20. Cette rainure d'étanchéité 21 est apte à recevoir un joint d'étanchéité 22 (représenté en figure 9) . Ce joint d'étanchéité 22 est par exemple réalisé en matériau plastique. Le module haut 2 comporte enfin une surface d'appui haute 23 sensiblement parallèle à la rainure de fixation haute 20 et destinée à prendre appui dans la rainure d'engagement 80.

En référence aux figures 6 et 7, les modules droit 5 et gauche 4 sont formés de profilés sensiblement identiques disposés symétriquement l'un par rapport à l'autre. Chacun des modules droit 5 et gauche 4 comporte respectivement une rainure de fixation gauche 50 et droite 40 destinée à recevoir les troisième et quatrième bords du panneau 1. Chacun des modules droit 5 et gauche 4 comporte également une rainure de positionnement 51, 41 chacune sensiblement perpendiculaire à la rainure de fixation gauche 50 et droite 40 correspondante. Les rainures de positionnement 51, 41 sont destinées à être engagées dans les gorges de positionnement 93 des panneaux 1 droit et gauche. Chacun des modules droit 5 et gauche 4 comporte respectivement une surface de plaquage gauche 52 et droite 42 sensiblement parallèle à la rainure de fixation droite 50 et gauche 40 correspondante et positionnées en regard de l'ouverture des rainures de positionnement 51, 41, de l'autre coté de la paroi du profilé. Les surfaces de plaquage gauche 52 et droite 42 sont destinées à recevoir l'appui des ailes de plaquage 91 de l'aiguille 9. Chacun des modules droit 5 et gauche 4 comporte enfin respectivement une surface d'appui gauche 53 et droite 43 prévues du coté de l'ouverture des rainures de positionnement 51, 41.

Une fois assemblés, les éléments constituants le dispositif photovoltaïque coopèrent les uns avec les autres, comme représenté en particulier sur les figures 8, 9, 10A et 10B. La barre 8 est fixée sur les liteaux 7, sensiblement perpendiculairement aux liteaux 7 au moyen de crochets 10 espacés par exemple de 50 cm. A cet effet, pour un premier crochet 10, une des plaques est insérée dans la rainure de crochetage 82 et l'autre plaque est vissée sur le liteau 7 de manière à plaquer la barre 8 contre le liteau 7. Pour un deuxième crochet 10 une des plaques est appliquée sur la deuxième surface d'appui 84 de la barre 8 et l'autre plaque est vissée sur le liteau 7 de manière à plaquer la barre 8 contre le liteau 7. Dans certains cas, lorsque la charpente n'est pas plane, la barre 8 n'est pas plaquée contre le liteau 7 et le crochet 10 sert à caler la hauteur de la barre 8 par rapport au liteau 7 en préservant un jeu en hauteur entre les deux.

Les panneaux 1 gauche et droit de la figure 8 sont disposés adjacents et dans un même plan. Le panneau 1 gauche est pourvu d'un module droit 5 dans lequel le bord droit de sa surface active est emmanché et auquel il est fixé par exemple au moyen de colle. Le panneau 1 droit est pourvu d'un module gauche 4 dans lequel le bord gauche de sa surface active est emmanché et auquel il est fixé par exemple au moyen de colle. Les extrémités supérieures des modules gauche 4 et droit 5 sont logées dans la rainure d'engagement 80 (visible sur la figure 9). Les modules gauche 4 et droit 5 sont séparés par l'aiguille 9, glissée dans et entre les modules gauche 4 et droit 5 de sorte que :
- les gorges de positionnement 93 de l'aiguille 9 sont emboîtées dans les rainures de positionnement 41, 51 des modules gauche 4 et droit 5,
- les ailes de plaquage 91 de l'aiguille 9 sont en appui sur les surfaces de plaquage gauche 52 et droite 42 des modules gauche 4 et droit 5, et
- la surface d'appui centrale 94 est en appui sur l'aile inférieure de la rainure d'engagement 80 formée par la barre 8, et
- les surfaces d'appui gauche 53 et droite 43 sont également en appui sur l'aile inférieure de la rainure d'engagement 80 formée par la barre 8.

Il ressort clairement des dessins et de la description que l'aiguille 9 autorise un décalage latéral de chacun de panneaux 1 gauche et droit grâce notamment aux jeux latéraux prévus entre les ailes de plaquage 91 et les ailes définissant les gorges de positionnement 93. La charpente sur laquelle la barre 8 et l'aiguille 9 sont fixées peut ainsi se déformer au fil des variations de températures sans que les panneaux 1 ne soient sollicités. Les panneaux 1 haut et bas de la figure 9 sont disposés de sorte que le bas du panneau 1 haut soit plus haut que le haut du panneau 1 bas. Ainsi, l'eau de pluie s'écoulera naturellement du panneau 1 haut vers le panneau 1 bas. Le bord bas du panneau 1 haut est pourvu d'un module bas 3 auquel il est fixé au moyen par exemple de colle. La rainure de maintien 31 du module bas 3 est emmanchée sur l'aile de maintien 81 de la barre 8 sur laquelle il peut coulisser. La surface d'appui basse définie par les ailettes 32 est en appui sur la face supérieure de la barre 8. Le panneau 1 haut est ainsi en appui sur la barre 8. Le bord haut du panneau 1 bas est pourvu d'un module haut 2 dans lequel il est emmanché et auquel il est fixé par exemple au moyen de colle. Le module haut 2 contenant le panneau 1 bas est logé dans la rainure d'engagement 80 de sorte que la surface d'appui haute 23 du module haut 2 soit en appui sur la face intérieure inférieure de la rainure d'engagement 80 de la barre 8. Le module haut 2 porte un joint d'étanchéité 22 logé dans la rainure d'étanchéité 21 et en appui sur la face intérieure supérieure de la rainure d'engagement 80. Comme il apparaît clairement sur cette figure, la rainure d'engagement 80 est suffisamment profonde pour que, lorsque le dispositif photovoltaïque est monté, un espace est préservé entre le module haut 2 et le fond de la rainure d'engagement 80. Comme détaillé plus loin, cet espace correspondant au second jeu longitudinal et permet le montage individuel de chaque panneau 1.

La barre 8 peut être formée d'un élément unique dont la longueur correspond à la largeur de la surface photovoltaïque souhaitée. La barre 8 peut également être formée de plusieurs tronçons de barre qui peuvent être disposés dans le prolongement les uns des autres. Dans ce cas, les tronçons de barre pourront être raccordés entre eux par des pièces intermédiaires, par exemple emboîtées dans deux tronçons de barre adjacents. Les tronçons peuvent avoir une longueur sensiblement égale à la largeur de chaque panneau 1. Dans ce cas, les tronçons de barre pourront être décalés en hauteur les uns par rapport aux autres pour une disposition en quinconce des panneaux 1.

Dans une autre variante de réalisation non représentée, la barre peut être remplacée par une tige support, par exemple de longueur égale à la largeur de la surface photovoltaïque souhaitée, et sur laquelle des tronçons de barre sont montés coulissant ou fixés.

Afin de bloquer la translation vers le bas de l'aiguille 9, le dispositif photovoltaïque peut être pourvu d'éléments de retenue 11, 12, chacun disposé entre au moins un bord du panneau 1 et l'aiguille 9.

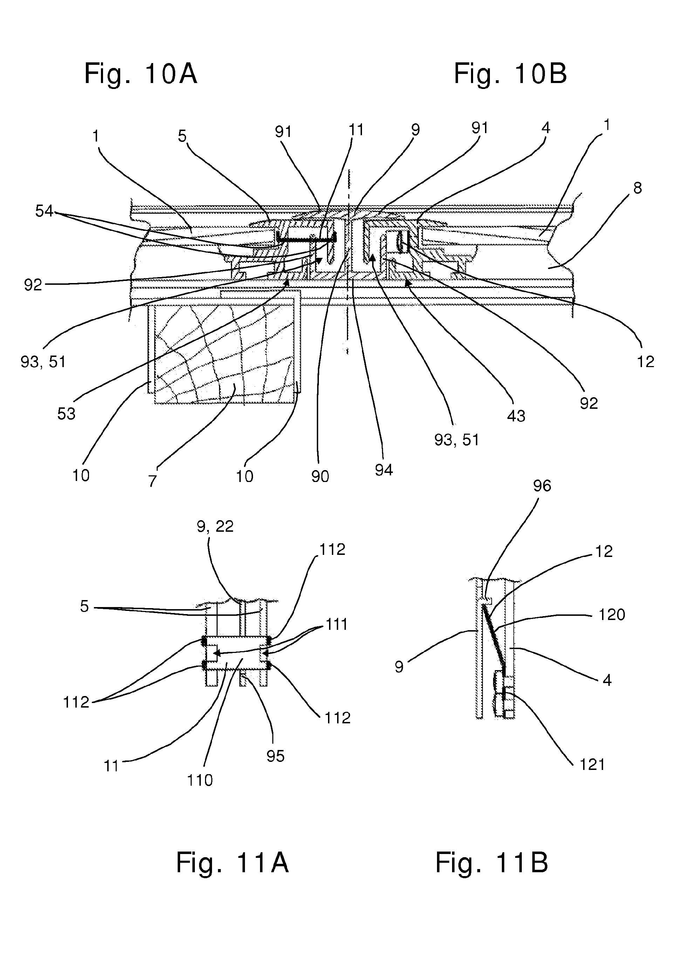

En référence aux figures 10A et 11A , chaque élément de retenue comporte une lame 11 élastiquement déformable, pourvu d'une plaque 110, sensiblement plane, dont chacune des extrémités est pourvue d'une découpe 111 délimitant deux languettes 112 relevées perpendiculairement à la plaque 110. La lame 11 est disposée entre le module droit 5 et l'aiguille 9, les languettes 112 étant logées dans des orifices 54 prévus dans le module droit 5 et la plaque 110 venant en appui contre une butée longitudinale 95 prévue à l'extrémité du retours 92 de l'aiguille 9.

En référence aux figures 10B et 11B, chaque élément de retenue comporte une lame 12 élastiquement déformable, pliée de manière à définir un premier et un second morceaux de lame 120, 121, l'extrémité du second morceau 121 étant solidarisé au module gauche 4 par l'intermédiaire de vis, l'extrémité du premier morceau 120 étant en appui contre une butée latérale 96 formée sur le retour 92 de l'aiguille 9.

Les lames 11 et 12 étant élastiquement déformables, elles peuvent être courbées pour autoriser le montage de l'aiguille 9. Une fois l'aiguille 9 en position, les lames 11 et 12 reprennent leur état initial, non déformé, dans lequel elles bloquent la translation de l'aiguille 9 en prenant appui sur les butées longitudinale 95 ou latérale 96.

Les différents profilés du dispositif photovoltaïque peuvent être chacun formé par plusieurs pièces assemblées par exemple par soudure, collage ou tout autre moyen adapté.

Pour réaliser le montage du dispositif photovoltaïque, par exemple sur une charpente, on procède comme décrit ci-après selon un mode de montage dans lequel on utilise des barres 8 dont la longueur est sensiblement identique à la largeur de la surface photovoltaïque souhaitée. Il est bien entendu que lorsqu'on utilise des tronçons de barre, le procédé est sensiblement similaire.

Dans un premier temps, on fixe les barres 8 à la charpente. Pour ce faire, au moyen de vis, on fixe des crochets 10 inférieurs sur des liteaux 7 de la charpente de sorte qu'ils soient alignés selon une ligne sensiblement horizontale et donc sensiblement perpendiculaire aux liteaux 7. On emmanche ensuite une première barre 8 sur les crochets 10 inférieurs de sorte que ces derniers soient logés dans la rainure de crochetage 82 de la barre 8. On fixe la barre 8 au moyen de crochets 10 disposés en opposition par rapport au liteau 7 par rapport aux crochets 10 préalablement fixés. Ces nouveaux crochets 10 prennent appui sur la deuxième surface d'appui 84 de la barre 8. Au moyen d'une pige de dimensions adaptées, que l'on dispose provisoirement entre la première barre 8 fixée et une deuxième barre 8 à fixer, on détermine la position de la deuxième barre 8. On fixe ensuite la deuxième barre 8 alors sensiblement parallèle à la première barre 8 au moyen des crochets 10, de manière similaire à la première barre 8. La distance entre la première et la seconde barres 8 est prévue pour être sensiblement égale à la hauteur des panneaux 1. On place ensuite l'ensemble des barres 8 qui vont délimiter la surface photovoltaïque souhaitée.

Dans un deuxième temps, on monte les panneaux 1 sur les barres 8. Chacun des panneaux 1 est au préalable pourvu de ses modules haut 2, bas 3, droit 4 et gauche 5 auxquels il est collé et la rainure d'étanchéité 21 du module haut 2 est pourvue de son joint d'étanchéité 22. Chaque panneau 1 est monté individuellement. Pour ce faire, chaque panneau 1 est incliné par rapport au plan formé par les barres 8 de manière à dégager son module bas 3 de la barre 8 inférieure et engager son module haut 2 dans la rainure d'engagement 80 de la barre 8 supérieure. Une fois le module haut 2 engagé à fond dans la rainure d'engagement 80, le panneau 1 peut être rabattu vers le plan formé par les barres 8 jusqu'à ce que la surface d'appui basse, définie par les ailettes 32, soit en appui sur la face supérieure de la barre 8. Le panneau 1 est alors dans une position « pré-montée » dans laquelle le module haut 2 et le fond de la rainure d'engagement 80 sont séparés par un premier jeu longitudinal pouvant être nul. Le panneau 1 est alors décalé par glissement vers le bas afin que la rainure de maintien 31 du module bas 3 soit emmanchée sur l'aile de maintien 81 de la barre 8. Le panneau 1 est alors dans une position « montée » dans laquelle le module haut 2 et le fond de la rainure d'engagement 80 sont séparés par un second jeu longitudinal, le second jeu longitudinal étant supérieur au premier jeu longitudinal.

La pige utilisée pour fixer les barres 8 à la charpente et les éléments constituant le dispositif photovoltaïque est telle qu'avec leurs modules haut 2 et bas 3, les panneaux 1 présentent chacun une hauteur séparant les arêtes opposées de leurs modules haut 2, bas 3, supérieure à la distance séparant l'ouverture de la rainure d'engagement 80 de la barre 8 supérieure et l'extrémité de l'aile de maintien 81 de la barre 8 inférieure. De même, chaque panneau 1 présente une hauteur, séparant les extrémités opposées de ses modules haut 2, bas 3, inférieure à la distance séparant le fond de la rainure d'engagement 80 et l'extrémité de l'aile de maintien 81. Le premier jeu longitudinal séparant le module haut 2 du fond de la rainure d'engagement 80 dans la position « pré-montée » est ainsi exemple nul et le second jeu longitudinal séparant le module haut 2 du fond de la rainure d'engagement 80 dans la position « montée » est de l'ordre de 16 mm et de préférence entre 12 et 14 mm.

Ainsi, les panneaux 1 peuvent être montés individuellement en commençant par la gauche, ou par la droite, par le haut ou par le bas.

Dans un troisième temps, après qu'au moins deux panneaux gauche et droit sont installés, on glisse une aiguille 9 entre ces panneaux 1 gauche et droit et on translate cette aiguille 9 de bas vers le haut, de sorte que :
- les gorges de positionnement 93 de l'aiguille 9 coulissent dans les rainures de positionnement 41, 51 des modules gauche 4 et droit 5,
- les ailes de plaquage 91 de l'aiguille 9 coulissent sur les surfaces de plaquage gauche 52 et droite 42 des modules gauche 4 et droit 5.
Pour engager l'aiguille 9 entre les panneaux 1 gauche et droit on déforme la lame 11, 12 pour qu'elle franchisse respectivement les butées latérale 96 ou longitudinale 95. La translation de l'aiguille 9 est prolongée jusqu'à ce que la surface d'appui centrale 94 soit en appui sur l'aile inférieure de la rainure d'engagement 80 formée par la barre 8 et que le dessus des ailes de plaquage 91 de l'aiguille 9 soient sous l'aile supérieure de la rainure d'engagement 80 formée par la barre 8. Lorsque l'aiguille 9 est dans sa position montée, la lame 11, 12 est en appui contre la butée latérale 96 ou longitudinale 95, empêchant la redescente involontaire de l'aiguille 9.

Les panneaux 1 peuvent être démontés un par un sans nécessiter que l'un (ou plusieurs) des panneaux 1 directement adjacents n'aient au préalable été démonté(s). Pour démonter un panneau 1 on procède aux étapes précédemment détaillées dans le sens inverse à savoir :
- on démonte les aiguilles 9 disposées de part et d'autre du panneau 1 à démonter. Pour démonter les aiguilles 9, ont utilise un outil allongé, par exemple en forme de fourchette, que l'on insère dans l'aiguille 9 afin de déformer la lame 11, 12 jusqu'à son passage au-dessus de la butée latérale 96 ou longitudinale 95. Le panneau 1 est alors toujours dans sa position « montée » dans laquelle le module haut 2 ménage un second jeu longitudinal avec le fond de la rainure d'engagement 80,
- on translate vers le haut par glissement le panneau 1 pour le faire passer de sa position « montée » à sa position « pré-montée » dans laquelle son module haut 2 est proche, sinon au contact, du fond de la rainure d'engagement 80, ménageant avec celle-ci un premier jeu longitudinal. Dans cette position « pré-montée », le module bas 3 est dégagé de la barre 8 inférieure,
- inclinaison du panneau 1 pour soulever et décaler le module bas 3 de la barre 8 inférieure,
- retrait du panneau 1 en le maintenant incliné et en le tirant vers l'arrière.

Les panneaux 1 sont bien entendu pourvus de moyens de raccordement électrique qui sont connectés à un réseau électrique lors du montage.

Dans une variante de réalisation non représentée, les aiguilles utilisées pour le maintien des panneaux disposés en bordure de la structure photovoltaïque ne comportent qu'une seule aile de plaquage. De même, les barres disposées en bordure supérieure et en bordure inférieure de la structure photovoltaïque peuvent comporter, pour la barre supérieure, une rainure d'engagement et pas d'aile de maintien, et pour la barre inférieure, une aile de maintien et pas de rainure d'engagement.

### Possibilités d'application industrielle

Il ressort clairement de la description que le dispositif photovoltaïque selon l'invention permet de monter facilement une structure photovoltaïque sans ordre ou sens prédéterminés. Ce dispositif photovoltaïque autorise le démontage individuel de panneaux. Il est bien entendu que les exemples décrits ne sont que des illustrations particulières et en aucun cas limitatives des domaines d'application de l'invention. L'Homme de l'art pourra apporter des aménagements de taille, de forme et de matériau à l'exemple de réalisation particulier du dispositif photovoltaïque sans pour autant sortir du cadre de la présente invention.

## Revendications

1. Dispositif photovoltaïque comportant une pluralité de panneaux (1) photovoltaïques et un support pour fixer lesdits panneaux (1), lesdits panneaux (1) comportant chacun au moins une surface active (10) pourvue de cellules photovoltaïques, ladite surface active (10) étant encadrée par des profilés formant un module haut (2), un module bas (3), un module droit (4) et un module gauche (5), définissant lesdits bords dudit panneau (1), ledit support comportant au moins un premier et un second éléments support (8) disposés en regard l'un de l'autre pour supporter au moins un premier panneau (1) et comportant des moyens de fixation agencés pour les fixer à une structure portante (7), le premier élément support (8) comportant au moins un premier logement (80) apte à recevoir ledit module haut (2) dudit premier panneau (1), **caractérisé en ce que** ledit second élément support (8) comporte au moins un relief (81) apte à être engagé dans un deuxième logement (31) formé par un ledit module bas (3) dudit premier panneau (1), **en ce qu'**au moins ledit premier panneau (1) présente une hauteur séparant les arêtes extrêmes de ses modules bas (3) et haut (4), supérieure à la distance séparant l'ouverture dudit premier logement (80) dudit premier élément support (8) et l'extrémité dudit relief (81) dudit second élément support (8) et **en ce que** ledit premier panneau (1) présente une hauteur séparant l'arête extrême de son module haut (2) et l'ouverture dudit deuxième logement (31) formée par son module bas (3) inférieure à la distance séparant le fond dudit premier logement (80) et l'extrémité dudit relief (81) pour que ledit premier panneau (1) puisse être mobile entre :
- une position « pré-montée » dans laquelle ledit premier bord dudit premier panneau (1) est engagé dans ledit premier logement (80) afin de préserver un premier jeu longitudinal avec le fond dudit premier logement (80), et dans laquelle ledit relief (81) n'est pas engagé dans ledit deuxième logement (31), et
- une position « montée » dans laquelle ledit premier bord dudit premier panneau (1) est engagé dans ledit premier logement (80) afin de préserver un second jeu longitudinal avec le fond dudit premier logement (80) supérieur audit premier jeu longitudinal, et dans laquelle ledit relief (81) est engagé dans ledit deuxième logement (31), ledit premier élément support (8) comportant un relief (81) orienté à l'opposé de l'ouverture dudit premier logement (80).

2. Dispositif photovoltaïque selon la revendication précédente, **caractérisé en ce que** ledit deuxième élément support (8) comporte un premier logement (80) orienté à l'opposé dudit relief (81) et apte à recevoir ledit module haut (2) d'un second panneau (1).

3. Dispositif photovoltaïque selon la revendication précédente, **caractérisé en ce que** lesdits premier et deuxième éléments support comportent chacun une barre (8) pourvue simultanément d'une rainure d'engagement (80) définissant ledit premier logement et d'une aile de maintien (81) définissant ledit relief.

4. Dispositif photovoltaïque selon l'une quelconque des revendications précédentes, **caractérisé en ce que** ledit module bas (2) comporte une rainure de maintien (31) définissant ledit deuxième logement.

5. Dispositif photovoltaïque selon l'une quelconque des revendications précédentes, **caractérisé en ce qu'**il comporte au moins un élément de plaquage (9) disposé le long d'au moins un des troisième et quatrième bords d'un panneau (1), ledit élément de plaquage (9) étant agencé pour maintenir ledit panneau (1) plaqué contre ledit support tout en préservant un jeu latéral avec respectivement son module droit (4) et son module gauche (5).

6. Dispositif photovoltaïque selon la revendication 5, **caractérisé en ce que** ledit élément de plaquage (9) comporte au moins un profilé dont une extrémité est agencée pour être logée dans ledit premier logement (80), au moins une aile de plaquage (91) agencée pour que sa face inférieure soit en appui sur l'un au moins desdits modules droit (4) et gauche (5)..

7. Dispositif photovoltaïque selon la revendication 6, **caractérisé en ce que** ledit élément de plaquage (9) comporte une âme (90) sensiblement perpendiculaire à ladite aile de plaquage (91), une arête de ladite âme (90) étant raccordée à ladite aile de plaquage (91), l'autre arête de ladite âme (90) étant raccordée à un retour (92) définissant une gorge de positionnement (93) fermant au moins en partie l'espace délimité par ladite aile de plaquage (91) et ladite âme (90) .

8. Dispositif photovoltaïque selon la revendication 5, **caractérisé en ce qu'**il comporte au moins un élément de retenue (11 ; 12) disposé entre l'un au moins desdits modules droit (4) et gauche (5) et ledit élément de plaquage (9) et agencé pour empêcher la translation dudit élément de plaquage (9) le long desdits modules droit (4) et gauche (5).

9. Dispositif photovoltaïque selon la revendication 8, **caractérisé en ce que** ledit élément de retenue comporte au moins une lame (11 ; 12) élastiquement déformable solidaire de l'un desdits modules droit (4) et gauche (5). et élément de plaquage (9), ladite lame (11 ; 12) étant également en appui sur une butée (95 ; 96) prévue respectivement sur l'un desdits élément de plaquage (9), modules droit (4) et gauche (5).

10. Dispositif photovoltaïque selon les revendications 4 et 7, **caractérisé en ce que** lesdits modules gauche et droit (4, 5) sont formés de profilés sensiblement identiques comportant chacun une rainure de fixation gauche et droite (40, 50) destinée à recevoir ledit premier panneau (1), une rainure de positionnement (41, 51) sensiblement perpendiculaire à ladite rainure de fixation gauche et droite (40, 50) et destinée à être engagée dans ladite gorge de positionnement (93) et une surface d'appui gauche et droite (43, 53) sensiblement parallèle à ladite rainure de fixation gauche et droite (40, 50) et destinée à venir en appui dans ladite rainure d'engagement (80).

11. Dispositif photovoltaïque selon la revendication 4, **caractérisé en ce que** ledit module bas (3) comporte au moins une rainure de maintien (31) définissant ledit deuxième logement, et une surface de fixation (30) destinée à recevoir l'appui dudit premier panneau (1) et sensiblement perpendiculaire à ladite rainure de maintien (81), ledit module bas (3) définissant également une surface d'appui basse destinée à venir en contact avec ladite barre (8), ladite surface d'appui basse étant décalée latéralement de ladite surface de fixation (30).

12. Dispositif photovoltaïque selon la revendication 4, **caractérisé en ce que** ledit module haut (2) comporte une rainure de fixation haute (20) destinée à recevoir ledit premier panneau (1), une rainure d'étanchéité (21) sensiblement perpendiculaire à ladite rainure de fixation haute (20) et apte à recevoir un joint d'étanchéité (22), et une surface d'appui haute (23) sensiblement parallèle à ladite rainure de fixation haute (20) et destinée à venir en appui dans ladite rainure d'engagement (80).

13. Dispositif photovoltaïque selon l'une quelconque des revendications précédentes, **caractérisé en ce que** ledit élément de plaquage (9) comporte des moyens de fixation agencés pour le fixer à une structure portante (7).
